# EUROPÄISCHE PATENTSCHRIFT

(11) **EP 4 033 943 B1**
(45) Veröffentlichungstag und Bekanntmachung des Hinweises auf die Patenterteilung: **27.12.2023**
(21) Anmeldenummer: 20807711.5
(22) Anmeldetag: 13.11.2020
(51) Int. Cl.: A47J 27/08, A47J 27/092

(54) **SCHNELLKOCHTOPF UND VERWENDUNG EINES BAJONETTVERSCHLUSSES**
PRESSURE COOKER AND USE OF A BAYONET CLOSURE
AUTOCUISEUR ET UTILISATION D'UNE FERMETURE À BAÏONNETTE

(30) Priorität: 10.12.2019 DE 102019219249
(43) Veröffentlichungstag der Anmeldung: 03.08.2022
(73) Patentinhaber: WMF GmbH, 73312 Geislingen/Steige (DE)
(72) Erfinder: BIEGERT, Valentin, 73312 Geislingen/Steige (DE)
(74) Vertreter: Pfenning, Meinig & Partner mbB
(86) Internationale Anmeldenummer: PCT/EP2020/082021
(87) Internationale Veröffentlichungsnummer: WO 2021/115725

(56) Entgegenhaltungen:
- EP-A1- 0 726 049
- GB-A- 641 540
- US-A- 2 559 728

## Beschreibung

Es wird ein Schnellkochtopf mit einem Bajonettverschluss bereitgestellt, der einen Topf mit einem Topfgriff und einen Deckel mit einem Deckelgriff aufweist. Der Bajonettverschluss ist so ausgebildet, dass in einer Öffnungsposition des Bajonettverschlusses ein Kippen des Deckels im Befestigungsbereich des Topfgriffs in einer Weise möglich ist, dass sich der Deckel in einem Bereich vom Topf abheben lässt, der dem Befestigungsbereich des Topfgriffs gegenüber liegt, aber sich der Deckel nicht in einem Befestigungsbereich des Topfgriffs vom Topf abheben lässt. Der Schnellkochtopf vermeidet dadurch Personenschäden, bzw. Unfälle, die bei gewöhnlichen Schnellkochtöpfen aus dem Stand der Technik durch "Siedeverzug" und Dampfaustritt auftreten können.

Bei gewöhnlichen Schnellkochtöpfen aus dem Stand der Technik (siehe zum Beispiel GB-A-641540) ist ein Öffnen des Schnellkochtopfs nach Erreichen der "Deckelöffnungsposition" des Schnellkochtopfes beliebig nach oben möglich. Es besteht bei diesen Schnellkochtöpfen auch die Möglichkeit eines "Aufklappens" zum Bediener hin. Dies geschieht beispielsweise, wenn der Zustand des Garguts geprüft wird. Dabei kann es zum Dampfaustritt in Richtung des Bedieners, bei breiigem Gargut sogar zum Siedeverzug, kommen. Dabei wird das Gargut explosionsartig aus dem Schnellkochtopf geschleudert. Durch den Öffnungswinkel des Schnellkochtopfdeckels zum Bediener hin, kann dieser von dem sehr heißen Gargut, bzw. von heißem Dampf, getroffen werden. Verbrennungen und Verbrühungen an Körper und Arme des Bedieners können die Folge hiervon sein.

Ausgehend hiervon war es die Aufgabe der vorliegenden Erfindung, einen Schnellkochtopf bereitzustellen, der die Nachteile von Schnellkochtöpfen aus dem Stand der Technik nicht aufweist. Insbesondere sollte ein Schnellkochtopf mit einem Bajonettverschluss bereitgestellt werden, welcher eine Verletzung des Benutzers durch Austritt von heißem Gargut in Richtung des Benutzers während einem Öffnen des Schnellkochtopfes durch einen Benutzer verhindert. Ferner sollte eine Verwendung eines Bajonettverschlusses in einem Schnellkochtopf vorgeschlagen werden, um diese vorteilhaften Eigenschaften zu ermöglichen.

Die Aufgabe wird gelöst durch den Schnellkochtopf mit den Merkmalen von Anspruch 1 und die Verwendung mit den Merkmalen von Anspruch 13. Die abhängigen Ansprüche zeigen vorteilhafte Weiterbildungen auf.

Erfindungsgemäß wird ein Schnellkochtopf bereitgestellt, enthaltend
a) einen Topf mit einem Topfgriff, der in einem Befestigungsbereich an einer Seitenwand des Topfes mit dem Topf befestigt ist, wobei sich der Topfgriff zumindest bereichsweise entlang einer Topfgriffachse erstreckt, die sich in eine im wesentlichen radiale Richtung vom Topf weg erstreckt; und
b) einen Deckel mit einem Deckelgriff, der an einer Oberseite des Deckels am Deckel befestigt ist, wobei sich der Deckelgriff zumindest bereichsweise entlang einer Deckelgriffachse erstreckt, die sich in eine im wesentlichen radiale Richtung vom Deckel weg erstreckt;
wobei der Topf und der Deckel zusammen einen Bajonettverschluss aufweisen und wobei der Bajonettverschluss dazu geeignet ist, den Topfgriff am Deckelgriff in einer Verschlussposition, in der sich die Topfgriffachse und die Deckelgriffachse im Wesentlichen in die gleiche Richtung erstrecken, zu befestigen und den Topfgriff vom Deckelgriff in einer Öffnungsposition, in der die Topfgriffachse und die Deckelgriffachse in einem bestimmten Winkel zueinander angeordnet sind, zu lösen.

Der Schnellkochtopf ist dadurch gekennzeichnet, dass der Bajonettverschluss so ausgebildet ist, dass in der Öffnungsposition des Bajonettverschlusses ein Kippen des Deckels im Befestigungsbereich des Topfgriffs in einer Weise möglich ist, dass sich der Deckel in einem Bereich vom Topf abheben lässt, der dem Befestigungsbereich des Topfgriffs gegenüber liegt, aber nicht im Befestigungsbereich des Topfgriffs vom Topf abheben lässt.

Der erfindungsgemäße Schnellkochtopf hat den Vorteil, dass er ein "Aufklappens" des Topfdeckels zum Bediener während einer Benutzung des Schnellkochtopfes verhindert. Folglich kann bei einem Öffnen des Schnellkochtopfes während seiner Verwendung kein heißes Gargut mehr in Richtung des Benutzers aus dem Schnellkochtopf austreten. Verbrennungen bzw. Verbrühungen des Benutzers, die sonst bei einer Öffnung des Schnellkochtopfes durch austretendes, heißes Gargut entstehen können, werden somit verhindert.

Der Vorteil des Schnellkochtopfes wird dadurch erzielt, dass nach einem Erreichen der Öffnungsposition des Schnellkochtopfes der Schnellkochtopfdeckel nur auf der dem Befestigungsbereich des Topfgriffs gegenüberliegenden Seite aufgeklappt werden kann. Es ist also zunächst nur ein Kippen des Deckelgriffs nach "unten" möglich, wodurch der Deckel als "Schutzschild" fungiert und verhindert, dass Gargutspritzer und Dampf in Richtung Benutzer aus dem Topf austreten können. Erst in einem anschließenden Schritt kann (in einer Abhebungsposition des Bajonettverschlusses) der Schnellkochtopfdeckel aus der "Bajonettüberlappung" gezogen werden und vom Topf abgenommen werden. Es besteht für den Benutzer somit auch die Möglichkeit, im Falle von austretendem Dampf oder Gargut in die ihm gegenüberliegende Richtung zu reagieren und den Schnellkochtopfdeckel (schnell) wieder zuzuklappen. Dampf und Gargut strömen dabei nicht in Richtung des Benutzers aus.

Der Schnellkochtopf ist bevorzugt dadurch gekennzeichnet, dass der Bajonettverschluss einen durchgängigen Bajonettlappen aufweist. Diese Ausgestaltungsform des Bajonettlappsens ist eine bevorzugte Ausgestaltungsform, um die erfindungsgemäße Wirkung zu erreichen. Der durchgängige Bajonettlappen zeichnet sich insbesondere dadurch aus, dass er im Bereich des Deckelgriffes keine Lücke aufweist. Dadurch wird der Topfdeckel am Topf gehalten und kann an dieser Stelle nicht nach oben geöffnet, d.h. nach oben vom Topf abgehoben, werden.

Der Bajonettlappen kann am Topf angeordnet sein, besonders bevorzugt an der Seitenwand des Topfes angeordnet sein, besonders bevorzugt einstückig mit dem Topf sein.

Der Bajonettlappen kann in Richtung einer Öffnung des Topfes oberhalb dem Topfgriff angeordnet sein.

Ferner kann ein Bajonettlappen am Topf und ein weiterer Bajonettlappen am Topfgriff angeordnet sein.

In einer bevorzugten Ausgestaltungsform erstreckt sich der Bajonettlappen über eine Breite von 76 bis 225 cm entlang der Seitenwand des Topfes.

Ferner ist bevorzugt, dass sich der Bajonettlappen über eine Länge von 0,15 bis 0,4 cm senkrecht zur Seitenwand erstreckt.

Der Bajonettlappen kann einen Abstand von 0,7 bis 4,0 cm zum Topfgriff aufweisen.

In einer bevorzugten Ausgestaltungsform weist der Deckel ein Gegenstück zum Bajonettlappen auf, das zur Aufnahme des Bajonettlappens geeignet ist und dazu geeignet ist, mit dem Bajonettlappen in der Öffnungsposition ein Scharnier auszubilden.

Der Bajonettverschluss des Schnellkochtopfes kann so ausgebildet sein, dass in der Verschlussposition des Bajonettverschlusses die Topfgriffachse und die Deckelgriffachse in einem Winkel (entlang der Seitenwand des Topfes) von ≤ 10°, bevorzugt ≤ 8°, besonders bevorzugt ≤ 6°, ganz besonders bevorzugt ≤ 4°, insbesondere ≤ 2°, zueinander angeordnet sind.

Ferner kann der Bajonettverschluss so ausgebildet sein, dass in der Öffnungsposition des Bajonettverschlusses die Topfgriffachse und die Deckelgriffachse in einem Winkel (entlang der Seitenwand des Topfes) zueinander angeordnet sind, der größer ist als die Breite des Topfgriffs und/oder Deckelgriffs. Abgesehen davon kann der Bajonettverschluss so ausgebildet sein, dass in der Öffnungsposition des Bajonettverschlusses die Topfgriffachse und die Deckelgriffachse in einem Winkel (entlang der Seitenwand des Topfes) von > 10° bis 60°, bevorzugt 15° bis 55°, besonders bevorzugt 20° bis 50°, ganz besonders bevorzugt 25 bis 45°, zueinander angeordnet sind.

In einer bevorzugten Ausgestaltungsform ist der Bajonettverschluss so ausgebildet, dass in der Öffnungsposition des Bajonettverschlusses die Deckelgriffachse (bzw. der Deckel) um einem Winkel von maximal 60°, bevorzugt maximal 50°, besonders bevorzugt maximal 40°, ganz besonders bevorzugt maximal 30°, in Bezug auf die Deckelgriffachse in der Verschlussposition (und hin zur Seitenwand des Topfes), kippbar ist.

Der Bajonettverschluss ist bevorzugt so ausgebildet, dass er eine Deckelabhebungsposition aufweist, wobei in der Deckelabhebungsposition des Bajonettverschlusses die Topfgriffachse und die Deckelgriffachse in einem Winkel zueinander angeordnet sind, der größer ist als der Winkel zwischen Topfgriffachse und Deckelgriffachse in der Öffnungsposition. In der Deckelabhebungsposition des Bajonettverschlusses kann der Deckel ganz vom Topf abgehoben werden (z.B. aus einem gegenüberliegenden Bajonett des Bajonettverschlusses gehoben werden). Dies geschieht durch Drehen der Deckelgriffachse (bzw. des Deckels) über die Öffnungsposition des Bajonettverschlusses hinaus, d.h. ein Drehen der Deckelgriffachse (bzw. des Deckels), um einen größeren Winkel als für das Erreichen der Öffnungsposition aus der Verschlussposition erforderlich ist.

Bei erreichter Deckelabhebungsposition des Bajonettverschlusses kann der Deckel durch die Ausgestaltung des Bajonettverschlusses (z.B. in Richtung der Topfgriffachse) vom Topf abgezogen werden. Durch die Ausgestaltung der Deckelabhebungsposition des Bajonettverschlusses kann der Deckel somit erst dann vom Topf abgehoben und entfernt werden, wenn vorher ein bestimmter "Drehgrad" des Deckels in Bezug auf den Topf erreicht wurde. Damit kann sichergestellt werden, dass zunächst eine bestimmte Kippung des Deckels, und damit Öffnung des Deckels in einer Richtung vom Benutzer weg, erfolgen kann, bevor der Deckel vom Benutzer ganz vom Topf abgehoben und entfernt werden kann. Ein mögliches Entweichen von heißem Gargut erfolgt damit zwangsweise erst in einen Bereich, der dem Befestigungsbereich des Topfgriffs gegenüber liegt, d.h. einem Bereich, der vom Benutzer weg gerichtet ist. Ein anschließendes komplettes Abheben und Entfernen des Deckels vom Topf stellt dann für den Benutzer des Schnellkochtopfes keine Gefahr mehr dar, da der Druck dann bereits aus dem Schnellkochtopf entwichen ist.

Es wird ferner die Verwendung eines Bajonettverschlusses in einem einen Topf mit Topfgriff und einen Deckel mit Deckelgriff aufweisenden Schnellkochtopf vorgeschlagen, dadurch gekennzeichnet, dass der Bajonettverschluss so ausgebildet ist, dass in einer Öffnungsposition des Bajonettverschlusses ein Kippen des Deckels in einem Befestigungsbereich des Topfgriffs am Topf in einer Weise möglich ist, dass sich der Deckel in einem Bereich vom Topf abheben lässt, der dem Befestigungsbereich des Topfgriffs am Topf gegenüberliegt, aber nicht im Befestigungsbereich des Topfgriffs vom Topf abheben lässt.

Anhand der nachfolgenden Figuren soll der erfindungsgemäße Gegenstand näher erläutert werden, ohne diesen auf die hier dargestellten, spezifischen Ausgestaltungsformen einschränken zu wollen.

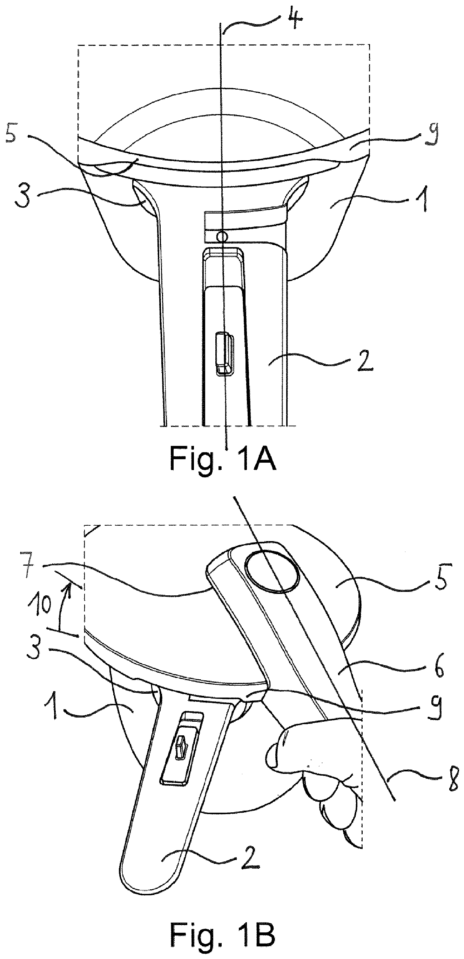

Figur 1 zeigt eine Ansicht eines erfindungsgemäßen Schnellkochtopfes von der Seite des Schnellkochtopfes, auf der sich der Deckelgriff 6 befindet. Der Deckelgriff ist an der Oberseite des Deckels 7 am Deckel 5 befestigt und der Topfgriff 2 ist in einem Befestigungsbereich 3 des Topgriffs 2 am Topf 1 befestigt. Figur 1A zeigt den Topf 1 des Schnellkochtopfes mit einem durchgängigen Bajonettlappen als Teil des Bajonettverschlusses 9. Figur 1B zeigt den Topf 1 mit einem aufgesetzten Deckel 5 in einer "Öffnungsposition". Die Topfgriffachse 4 und Deckelgriffachse 8 stehen hier zueinander in einem Winkel von ca. 35° in Richtung des Umfangs des Topfes 1, d.h. parallel zu einer Fläche, die von der Öffnung des Topfes 1 aufgespannt wird. In der Öffnungsposition kann die Deckelgriffachse 8 zudem um einen bestimmten Kippwinkel 10 zur Topfgriffachse 4 nach unten gekippt werden, d.h. dieser Kippwinkel 10 erstreckt sich senkrecht zu einer Fläche, die von der Öffnung des Topfes aufgespannt wird. In dieser Öffnungsposition kann zwar der Deckel 5 in dem Bereich vom Topf 1 abgehoben werden, der dem Befestigungsbereich 3 des Topfgriffs 2 gegenüber liegt (Bereich links oben in Figur 1B), aber nicht im Befestigungsbereich 3 des Topfgriffs 2 vom Topf 1 abgehoben werden (Bereich rechts unten in Figur 1B). Erst nach einem stärkeren Drehen des Deckelgriffs 6 weg von der Topfgriffachse (hier: nach rechts) wird die Deckelabhebungsposition des Bajonettverschlusses 9 erreicht und der Deckel 5 kann vom Topf 1 auch in dem Befestigungsbereich 3 des Topfgriffs 2 vom Topf 1 abgehoben und vom Topf 1 entfernt werden.

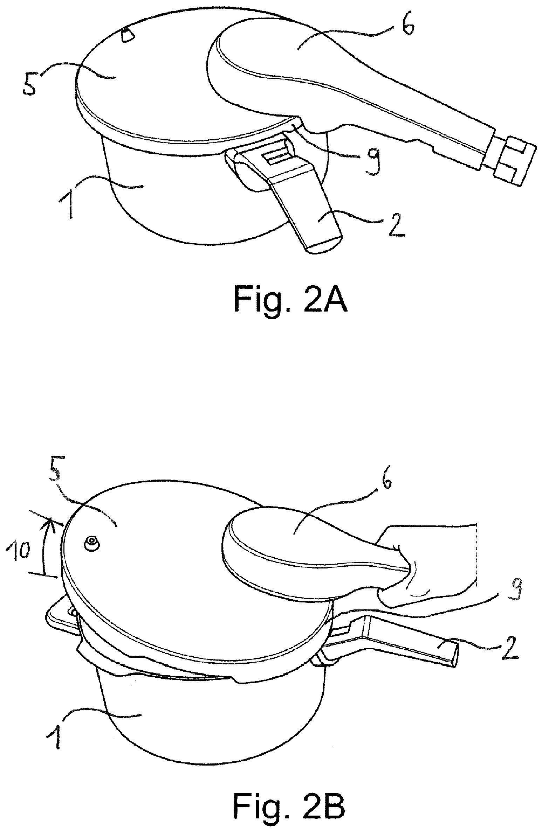

Figur 2 zeigt eine seitliche Ansicht eines erfindungsgemäßen Schnellkochtopfes in der ungekippten Öffnungsposition des Bajonettverschlusses (Figur 2A) und in der gekippten Öffnungsposition des Bajonettverschlusses (Figur 2B). In der Öffnungsposition kann der Deckel 5 durch eine Bewegung des Deckelgriffs 6 nach unten über den Bajonettverschluss 9 gekippt werden, sodass er auf einer dem Benutzer gegenüberliegenden Seite vom Topf 1 um einen Kippwinkel 10 abgehoben wird (siehe Figur 2B). In dieser Öffnungsposition des Bajonettverschlusses 9 ist ein komplettes Abheben des Topfes 1, d.h. auch ein Abheben des Topfes 1 im Befestigungsbereich 3 des Topfgriffs 2 am Topf 1, nicht möglich. Erst wenn der Deckel 5 über einen bestimmten Winkel hinaus weg von der Topfgriffachse (hier: nach rechts) gedreht wird, gelangt der Bajonettverschluss 9 in die Deckelabhebeposition und der Deckel 5 kann auch im Befestigungsbereich 3 des Topfgriffs 2 vom Topf 1 abgehoben und vom Topf 1 entfernt werden.

### Bezugszeichenliste

- 1:: Topf;
- 2:: Topfgriff;
- 3:: Befestigungsbereich des Topfgriffs am Topf;
- 4:: Topfgriffachse;
- 5:: Deckel;
- 6:: Deckelgriff;
- 7:: Oberseite des Deckels;
- 8:: Deckelgriffachse;
- 9:: Bajonettverschluss;
- 10:: Kippwinkel, um den Deckels gekippt wird.

## Patentansprüche

1. Schnellkochtopf, enthaltend
a) einen Topf (1) mit einem Topfgriff (2), der in einem Befestigungsbereich (3) an einer Seitenwand des Topfes mit dem Topf befestigt ist, wobei sich der Topfgriff zumindest bereichsweise entlang einer Topfgriffachse (4) erstreckt, die sich in eine im wesentlichen radiale Richtung vom Topf weg erstreckt; und
b) einen Deckel (5) mit einem Deckelgriff (6) der an einer Oberseite (7) des Deckels am Deckel befestigt ist, wobei sich der Deckelgriff zumindest bereichsweise entlang einer Deckelgriffachse (8) erstreckt, die sich in eine im wesentlichen radiale Richtung vom Deckel weg erstreckt;
wobei der Topf und der Deckel zusammen einen Bajonettverschluss (9) aufweisen,
wobei der Bajonettverschluss dazu geeignet ist, den Topfgriff am Deckelgriff in einer Verschlussposition, in der sich die Topfgriffachse und die Deckelgriffachse im Wesentlichen in die gleiche Richtung erstrecken, zu befestigen und den Topfgriff vom Deckelgriff in einer Öffnungsposition, in der die Topfgriffachse und die Deckelgriffachse in einem bestimmten Winkel zueinander angeordnet sind, zu lösen,
**dadurch gekennzeichnet, dass** der Bajonettverschluss so ausgebildet ist, dass in der Öffnungsposition des Bajonettverschlusses ein Kippen des Deckels im Befestigungsbereich des Topfgriffs in einer Weise möglich ist, dass sich der Deckel in einem Bereich vom Topf abheben lässt, der dem Befestigungsbereich des Topfgriffs gegenüber liegt, aber nicht im Befestigungsbereich des Topfgriffs vom Topf abheben lässt.

2. Schnellkochtopf gemäß Anspruch 1, **dadurch gekennzeichnet, dass** der Bajonettverschluss einen durchgängigen Bajonettlappen aufweist.

3. Schnellkochtopf gemäß Anspruch 2, **dadurch gekennzeichnet, dass** der Bajonettlappen am Topf angeordnet ist, besonders bevorzugt an der Seitenwand des Topfes angeordnet ist, besonders bevorzugt einstückig mit dem Topf ist.

4. Schnellkochtopf gemäß einem der Ansprüche 2 oder 3, **dadurch gekennzeichnet, dass** der Bajonettlappen in Richtung einer Öffnung des Topfes oberhalb dem Topfgriff angeordnet ist.

5. Schnellkochtopf gemäß einem der Ansprüche 2 bis 4, **dadurch gekennzeichnet, dass** sich der Bajonettlappen über eine Breite von 76 bis 225 cm entlang der Seitenwand des Topfes erstreckt.

6. Schnellkochtopf gemäß einem der Ansprüche 2 bis 5, **dadurch gekennzeichnet, dass** sich der Bajonettlappen über eine Länge von 0,15 bis 0,4 cm senkrecht zur Seitenwand erstreckt.

7. Schnellkochtopf gemäß einem der Ansprüche 2 bis 6, **dadurch gekennzeichnet, dass** der Bajonettlappen einen Abstand von 0,7 bis 4,0 cm zum Topfgriff aufweist.

8. Schnellkochtopf gemäß einem der Ansprüche 2 bis 7, **dadurch gekennzeichnet, dass** der Deckel ein Gegenstück zum Bajonettlappen aufweist, das zur Aufnahme des Bajonettlappens geeignet ist und dazu geeignet ist, mit dem Bajonettlappen in der Öffnungsposition ein Scharnier auszubilden.

9. Schnellkochtopf gemäß einem der vorhergehenden Ansprüche, **dadurch gekennzeichnet, dass** der Bajonettverschluss so ausgebildet ist, dass in der Verschlussposition des Bajonettverschlusses die Topfgriffachse und die Deckelgriffachse in einem Winkel von ≤ 10°, bevorzugt ≤ 8°, besonders bevorzugt ≤ 6°, ganz besonders bevorzugt ≤ 4°, insbesondere ≤ 2°, zueinander angeordnet sind.

10. Schnellkochtopf gemäß einem der vorhergehenden Ansprüche, **dadurch gekennzeichnet, dass** der Bajonettverschluss so ausgebildet ist, dass in der Öffnungsposition des Bajonettverschlusses die Topfgriffachse und die Deckelgriffachse
i) in einem Winkel zueinander angeordnet sind, der größer ist als die Breite des Topfgriffs und/oder Deckelgriffs; und/oder
ii) in einem Winkel von > 10° bis 60°, bevorzugt 15° bis 55°, besonders bevorzugt 20° bis 50°, ganz besonders bevorzugt 25 bis 45°, zueinander angeordnet sind.

11. Schnellkochtopf gemäß einem der vorhergehenden Ansprüche, **dadurch gekennzeichnet, dass** der Bajonettverschluss so ausgebildet ist, dass in der Öffnungsposition des Bajonettverschlusses die Deckelgriffachse um einem Winkel von maximal 60°, bevorzugt maximal 50°, besonders bevorzugt maximal 40°, ganz besonders bevorzugt maximal 30°, in Bezug auf die Deckelgriffachse in der Verschlussposition, kippbar ist.

12. Schnellkochtopf gemäß einem der vorhergehenden Ansprüche, **dadurch gekennzeichnet**, der Bajonettverschluss eine Deckelabhebungsposition aufweist, wobei in der Deckelabhebungsposition des Bajonettverschlusses die Topfgriffachse und die Deckelgriffachse in einem Winkel zueinander angeordnet sind, der größer ist als der Winkel zwischen Topfgriffachse und Deckelgriffachse in der Öffnungsposition.

13. Verwendung eines Bajonettverschlusses (9) in einem einen Topf (1) mit Topfgriff (2) und einen Deckel (5) mit Deckelgriff (6) aufweisenden Schnellkochtopf,
**dadurch gekennzeichnet, dass** der Bajonettverschluss so ausgebildet ist, dass in einer Öffnungsposition des Bajonettverschlusses ein Kippen des Deckels in einem Befestigungsbereich des Topfgriffs am Topf in einer Weise möglich ist, dass sich der Deckel in einem Bereich vom Topf abheben lässt, der dem Befestigungsbereich des Topfgriffs am Topf gegenüber liegt, aber nicht im Befestigungsbereich des Topfgriffs vom Topf abheben lässt.

## Claims

1. A pressure cooker comprising
a) a pot (1) having a pot handle (2) that is fastened to the pot in a fastening region (3) at a side wall of the pot, wherein the pot handle extends at least regionally along a pot handle axis (4) that extends away from the pot in a substantially radial direction; and
b) a lid (5) having a lid handle (6) that is fastened to the lid at an upper side (7) of the lid, wherein the lid handle extends at least regionally along a lid handle axis (8) that extends away from the lid in a substantially radial direction;
wherein the pot and the lid together have a bayonet closure (9),
wherein the bayonet closure is suitable to fasten the pot handle to the lid handle in a closure position in which the pot handle axis and the lid handle axis extend in substantially the same direction and to release the pot handle from the lid handle in an opening position in which the pot handle axis and the lid handle axis are arranged at a specific angle to one another,
**characterized in that** the bayonet closure is configured such that, in the opening position of the bayonet closure, a tilting of the lid in the fastening region of the pot handle is possible in a manner such that the lid can be raised from the pot in a region that is disposed opposite the fastening region of the pot handle, but cannot be raised from the pot in the fastening region of the pot handle.

2. A pressure cooker in accordance with claim 1, **characterized in that** the bayonet closure has a continuous bayonet lug.

3. A pressure cooker in accordance with claim 2, **characterized in that** the bayonet lug is arranged at the pot, particularly preferably at the side wall of the pot, particularly preferably is in one piece with the pot.

4. A pressure cooker in accordance with one of the claims 2 or 3, **characterized in that** the bayonet lug is arranged, in a direction of an opening of the pot, above the pot handle.

5. A pressure cooker in accordance with one of the claims 2 to 4, **characterized in that** the bayonet lug extends over a width of 76 to 225 cm along the side wall of the pot.

6. A pressure cooker in accordance with one of the claims 2 to 5, **characterized in that** the bayonet lug extends over a length of 0.15 to 0.4 cm perpendicular to the side wall of the pot.

7. A pressure cooker in accordance with one of the claims 2 to 6, **characterized in that** the bayonet lug has a spacing of 0.7 to 4.0 cm from the pot handle.

8. A pressure cooker in accordance with one of the claims 2 to 7, **characterized in that** the lid has a counterpart to the bayonet lug that is suitable for receiving the bayonet lug and that is suitable to form a hinge with the bayonet lug in the opening position.

9. A pressure cooker in accordance with one of the preceding claims, **characterized in that** the bayonet closure is configured such that, in the closure position of the bayonet closure, the pot handle axis and the lid handle axis are arranged at an angle to one another of ≤ 10°, preferably ≤ 8°, particularly preferably ≤ 6°, very particularly preferably ≤ 4°, in particular ≤ 2°.

10. A pressure cooker in accordance with one of the preceding claims, **characterized in that** the bayonet closure is configured such that, in the opening position of the bayonet closure, the pot handle axis and the lid handle axis
i) are arranged at an angle to one another that is greater than the width of the pot handle and/or of the lid handle; and/or
ii) are arranged at an angle to one another of > 10° to 60°, preferably 15° bis 55°, particularly preferably 20° to 50°, very particularly preferably 25 to 45°.

11. A pressure cooker in accordance with one of the preceding claims, **characterized in that** the bayonet closure is configured such that, in the opening position of the bayonet closure, the lid handle axis is tiltable by an angle of a maximum of 60°, preferably a maximum of 50°, particularly preferably a maximum of 40°, very particularly preferably of a maximum of 30°, with respect to the lid handle axis in the closure position.

12. A pressure cooker in accordance with one of the preceding claims, **characterized in that** the bayonet closure has a lid raising position, wherein, in the lid raising position of the bayonet closure, the pot handle axis and the lid handle axis are arranged at an angle to one another that is greater than the angle between the pot handle axis and the lid handle axis in the opening position.

13. Use of a bayonet closure (9) in a pressure cooker having a pot (1) with a pot handle (2) and a lid (5) with a lid handle (6), **characterized in that** the bayonet closure is configured such that, in an opening position of the bayonet closure, a tilting of the lid in a fastening region of the pot handle at the pod is possible in a manner such that the lid can be raised from the pot in a region that is disposed opposite the fastening region of the pot handle, but cannot be raised from the pot in the fastening region of the pot handle.

## Revendications

1. Autocuiseur, contenant
a) une marmite (1) avec une poignée de marmite (2) qui est fixée dans une zone de fixation (3) à une paroi latérale de la marmite avec la marmite, dans lequel la poignée de marmite s'étend au moins par endroits le long d'un axe de poignée de marmite (4) qui s'étend dans une direction sensiblement radiale en s'éloignant de la marmite ; et
b) un couvercle (5) avec une poignée de couvercle (6) qui est fixée au couvercle sur une face supérieure (7) du couvercle, dans lequel la poignée de couvercle s'étend au moins par endroits le long d'un axe de poignée de couvercle (8) qui s'étend dans une direction sensiblement radiale en s'éloignant du couvercle ;
dans lequel la marmite et le couvercle présentent ensemble une fermeture à baïonnette (9),
dans lequel la fermeture à baïonnette est adaptée pour fixer la poignée de marmite à la poignée de couvercle dans une position de fermeture dans laquelle l'axe de poignée de marmite et l'axe de poignée de couvercle s'étendent sensiblement dans la même direction, et pour libérer la poignée de marmite de la poignée de couvercle dans une position d'ouverture dans laquelle l'axe de poignée de marmite et l'axe de poignée de couvercle sont disposés selon un certain angle l'un par rapport à l'autre,
**caractérisé en ce que** la fermeture à baïonnette est réalisée de telle sorte que, dans la position d'ouverture de la fermeture à baïonnette, un basculement du couvercle dans la zone de fixation de la poignée de marmite est possible de telle sorte que le couvercle peut être soulevé de la marmite dans une zone qui est opposée à la zone de fixation de la poignée de marmite, mais ne peut pas être soulevé de la marmite dans la zone de fixation de la poignée de marmite.

2. Autocuiseur selon la revendication 1, **caractérisé en ce que** la fermeture à baïonnette présente une languette à baïonnette continue.

3. Autocuiseur selon la revendication 2, **caractérisé en ce que** la languette à baïonnette est disposée sur la marmite, de manière particulièrement préférée sur la paroi latérale de la marmite, de manière particulièrement préférée d'un seul tenant avec la marmite.

4. Autocuiseur selon l'une quelconque des revendications 2 ou 3, **caractérisé en ce que** la languette à baïonnette est disposée en direction d'une ouverture de la marmite au-dessus de la poignée de marmite.

5. Autocuiseur selon l'une quelconque des revendications 2 à 4, **caractérisé en ce que** la languette à baïonnette s'étend sur une largeur de 76 à 225 cm le long de la paroi latérale de la marmite.

6. Autocuiseur selon l'une quelconque des revendications 2 à 5, **caractérisé en ce que** la languette à baïonnette s'étend sur une longueur de 0,15 à 0,4 cm perpendiculairement à la paroi latérale.

7. Autocuiseur selon l'une quelconque des revendications 2 à 6, **caractérisé en ce que** la languette à baïonnette est située à une distance de 0,7 à 4,0 cm de la poignée de marmite.

8. Autocuiseur selon l'une quelconque des revendications 2 à 7, **caractérisé en ce que** le couvercle présente une contrepartie à la languette à baïonnette, qui est adaptée pour recevoir la languette à baïonnette et adaptée pour former une charnière avec la languette à baïonnette dans la position d'ouverture.

9. Autocuiseur selon l'une quelconque des revendications précédentes, **caractérisé en ce que** la fermeture à baïonnette est réalisée de telle sorte que, dans la position de fermeture de la fermeture à baïonnette, l'axe de poignée de marmite et l'axe de poignée de couvercle sont disposés l'un par rapport à l'autre selon un angle de ≤ 10°, de préférence ≤ 8°, de manière particulièrement préférée ≤ 6°, de manière tout à fait préférée ≤ 4°, en particulier ≤ 2°.

10. Autocuiseur selon l'une quelconque des revendications précédentes, **caractérisé en ce que** la fermeture à baïonnette est réalisée de telle sorte que, dans la position d'ouverture de la fermeture à baïonnette, l'axe de poignée de marmite et l'axe de poignée de couvercle
i) sont disposés l'un par rapport à l'autre selon un angle supérieur à la largeur de la poignée de marmite et/ou de la poignée de couvercle ; et/ou
ii) sont disposés selon un angle de > 10° à 60°, de préférence de 15° à 55°, de manière particulièrement préférée de 20° à 50°, de manière tout à fait préférée de 25° à 45°.

11. Autocuiseur selon l'une quelconque des revendications précédentes, **caractérisé en ce que** la fermeture à baïonnette est réalisée de telle sorte que, dans la position d'ouverture de la fermeture à baïonnette, l'axe de poignée de couvercle peut être basculé d'un angle de 60° maximum, de préférence de 50° maximum, de manière particulièrement préférée de 40° maximum, de manière tout à fait préférée de 30° maximum, par rapport à l'axe de poignée de couvercle dans la position de fermeture.

12. Autocuiseur selon l'une quelconque des revendications précédentes, **caractérisé en ce que** la fermeture à baïonnette présente une position de soulèvement de couvercle, dans lequel l'axe de poignée de marmite et l'axe de poignée de couvercle sont disposés l'un par rapport à l'autre dans la position de soulèvement de couvercle de la fermeture à baïonnette selon un angle qui est supérieur à l'angle entre l'axe de poignée de marmite et l'axe de poignée de couvercle dans la position d'ouverture.

13. Utilisation d'une fermeture à baïonnette (9) dans un autocuiseur présentant une marmite (1) avec une poignée de marmite (2) et un couvercle (5) avec une poignée de couvercle (6),
**caractérisée en ce que** la fermeture à baïonnette est réalisée de telle sorte que, dans une position d'ouverture de la fermeture à baïonnette, un basculement du couvercle dans une zone de fixation de la poignée de marmite sur la marmite est possible d'une manière telle que le couvercle peut être soulevé de la marmite dans une zone opposée à la zone de fixation de la poignée de marmite, mais ne peut pas être soulevé de la marmite dans la zone de fixation de la poignée de marmite.
